# EUROPÄISCHE PATENTSCHRIFT

(11) **EP 2 495 525 B1**
(45) Veröffentlichungstag und Bekanntmachung des Hinweises auf die Patenterteilung: **07.10.2015**
(21) Anmeldenummer: 12157625.0
(22) Anmeldetag: 01.03.2012
(51) Int. Cl.: G01B 11/25, B23K 9/127, B23K 26/03, G06T 7/00

(54) **Optisches Prüfverfahren mittels Intensitätsverlauf**
Optical testing method on the basis of intensity distribution
Procédé de vérification optique à l'aide d'un déroulement d'intensité

(30) Priorität: 01.03.2011 DE 102011012729
(43) Veröffentlichungstag der Anmeldung: 05.09.2012
(73) Patentinhaber: SmartRay GmbH, 82515 Wolfratshausen (DE)
(72) Erfinder: Simon, Alexander, 82515 Wolfratshausen (DE)
(74) Vertreter: Weickmann & Weickmann

(56) Entgegenhaltungen:
- DE-A1- 4 408 291
- JP-A- 6 241 740
- JP-A- 2000 337 832
- JP-A- 2008 045 935

## Beschreibung

### I. Anwendungsgebiet

Die Erfindung betrifft das Prüfen dreidimensionaler, insbesondere längs verlaufender, Prüfkonturen.

### II. Technischer Hintergrund

Die Bestimmung der Form 3-dimensionaler Konturen wird in der Industrie häufig benötigt, um definiert angebrachte Konturen einer Qualitätskontrolle zu unterziehen.

Die Ermittlung der Form oder anderer, mit der Oberflächenform zusammenhängender Ergebnisdaten, z. B. des Volumens, einer Prüfkontur, z. B. einer Erhebung, wird dabei häufig mittels des Lichtschnittverfahrens durchgeführt.

Dabei wird ein fächerförmiger, also in nur einer Ebene aufgespreizter, Lichtstrahl auf die zu untersuchende Oberfläche aufgestrahlt, ergibt dort eine Lichtlinie und wird unter einem Winkel, meist einem spitzen Winkel, zur Bestrahlungsrichtung beobachtet, so dass der Verlauf der Lichtlinie auf der Oberfläche dort vorhandene Erhebungen erkennen lässt, indem auch das beobachtete Abbild der Lichtlinie auf einem optischen Sensor dann eine Erhöhung zeigt, wenn der linienförmig auftreffende Lichtstrahl-Fächer über diese Erhebung hinweg verläuft. In der Regel soll hierfür die Verlaufsrichtung der Lichtlinie nicht parallel zur Verlaufsrichtung der Erhebung liegen, sondern quer dazu.

Derartige einzelne Abbilder von Lichtlinien auf dem Objekt können - während sich das Objekt relativ und in Querrichtung zur Lichtlinie bewegt - in kurzen zeitlichen Abständen vielfach angefertigt werden, so dass durch Hintereinanderstellung dieser einzelnen Höhenschnitte, also Scans, die 3-dimensionale Oberflächengestaltung ermittelt werden kann, und/oder damit zusammenhängende Parameter wie Höhe, Volumen, Breite, Lage der Erhebungen usw.

Auch Schweißnähte oder Lötnähte zwischen aneinander angrenzenden Blechteilen im Automobilbau werden auf diese Art und Weise auf ihre Form und damit Qualität untersucht (z.B. JP2000 337832 A und JP 6241740 A), indem vor allem unzulässige Vertiefungen in der Lötnaht vor dem Lackieren aufgefunden werden sollen.

Die Überprüfung auf Fehlstellen wird dabei in der Regel nicht nur unter einem einzigen, sondern unter zwei verschiedenen Beobachtungswinkeln durchgeführt. Darüber hinaus werden die Aufnahmen gegebenenfalls auch mehrfach hintereinander mit unterschiedlichen Lichtmengen angefertigt.

Im Folgenden wird in der Anmeldung immer beispielhaft eine Schweißnaht genannt, ohne die Erfindung auf diese Art von zu überprüfenden Bereich zu beschränken.

Häufig muss hierfür zunächst die genaue Lage des zu überprüfendem Bereichs z. B. der Schweißnaht, ermittelt werden, um die Überprüfung genau und nur an der Schweißnaht durchzuführen:
Denn einerseits muss zuverlässig ausgeschlossen werden, dass Teile der Schweißnaht nicht überprüft werden, zum anderen darf der Prüfbereich nicht so weiträumig gewählt werden, dass zuviel von der Umgebung der Schweißnaht auch noch im Prüfbereich liegt, denn dies würde den Überprüfungsund Auswerteaufwand und damit auch den Zeitaufwand für die Überprüfung unzulässig in die Höhe treiben.

Es sind Lösungen bekannt, bei denen zunächst die Lage der Schweißnaht mit einem ersten Verfahren, beispielsweise einem 2D-Verfahren, ermittelt wird, während die Überprüfung auf Fehlstellen in der Schweißnaht anschließend durch 3D-Verfahren, also eine Höhenbestimmung des Profils der Schweißnaht und Ähnliches, insbesondere mittels des speziellen Lichtschnitt-Triangulationsverfahren, durchgeführt wird.

Dabei ist es auch bekannt, eine erste Auswahl möglicher Fehlstellen ebenfalls noch mittels des 2D-Verfahrens durchzuführen, mit dem die Lage der Schweißnaht anfänglich bestimmt wurde, und danach erst diese angeblichen Fehlstellen mit Hilfe des 3D-Verfahrens daraufhin zu überprüfen, ob es tatsächlich Fehlstellen sind.

Nachteilig bei der Kombination von 2D- und 3D-Verfahren ist bisher, dass für beide Verfahren separate Verfahrensschritte und Aufnahmen angefertigt werden und auch unterschiedliche Hardware für das 2D- und das 3D-Verfahren - zumindest teilweise - benötigt wird.

Wird die Schweißnaht in ihrer gesamten Erstreckung durch das 3D-Verfahren abgetastet, kann das Vorab-Auffinden von Fehlstellen mittels 2D-Verfahren natürlich unterbleiben.

Ein weiterer Grund für die zweistufige 2D/3D- Vorgehensweise besteht darin, dass eine Schweißnaht oder Lötnaht, die optimal ausgeführt ist, gar keine Niveauerhöhung gegenüber dem umgebenden glatten Blech darstellt, sondern auf dem selben Höhenniveau liegt, und sich lediglich in ihrer FeinStruktur oder ihrem Reflexionsverhalten von dem umgebenden z. B. Blech unterscheidet, indem die Schweißnaht selbst weniger glatt ist, also geringfügige kleine Erhöhungen und Vertiefungen aufweist.

Wegen des gleichen Höhenniveaus kann aus dem 3D-Höhenprofil keine Lage der Schweißnaht ermittelt werden, da das damit dargestellte Höhenprofil gröber auflöst als die vielen kleinen Erhebungen und Vertiefungen der Feinstruktur der Oberfläche der Schweißnaht, die somit im 3D-Höhenprofil nicht ersichtlich sind.

### III. Darstellung der Erfindung

### a) Technische Aufgabe

Es ist daher die Aufgabe der Erfindung, ein Verfahren und eine Vorrichtung zur Verfügung zu stellen, welches vor allem den Hardware-Aufwand solcher optischer Überprüfungen sowie die Untersuchungszeit reduziert.

### b) Lösung der Aufgabe

Diese Aufgabe wird durch die Merkmale des Anspruchs 1 gelöst. Vorteilhafte Ausführungsformen ergeben sich aus den Unteransprüchen.

Aus mehreren Abbildern von Lichtlinien, die auf dem optischen Sensor zum Zwecke der dreidimensionalen Überprüfung erzeugt werden, wird vor der dreidimensionalen Überprüfung ein zweidimensionales Intensitätsbild erzeugt, welches eine Art Schwarz-Weiß-Aufnahme der Prüfkontur und seiner Umgebung von oben ist, indem die Prüfkontur einerseits und die Umgebung - also auch innerhalb desselben Abbildes einer Lichtlinie auf dem optischen Sensor - andererseits sich in ihrer Helligkeit deutlich unterscheiden, insbesondere einerseits weiß und andererseits schwarz sind.

Dann kann mit bekannten Verfahren der Kantenerkennung der Prüfbereich genau festgelegt werden. Nur in diesem Bereich muss dann die dreidimensionale Überprüfung der Prüfkontur mittels des Lichtschnitt-Triangulationsverfahrens durchführt werden.

Bei einer Schweißnaht, die auf dem gleichen Höhenniveau wie das umgebende Blech liegt und keine Aufwölbung darstellt, wird dann das Abbild der Lichtlinie auf dem optischen Sensor zwar eine in etwa gerade Linie sein und keine hutförmige Linie. Im Bereich der Schweißnaht wird dieses linienförmige Abbild jedoch z. B. heller sein als in der Umgebung der Schweißnaht. Eine Unterscheidung dieser Bereiche nach der Intensität, also Helligkeit, zeigt somit die Lage der Schweißnaht an. Sobald jedoch eine der zu detektierenden Unregelmäßigkeiten - sei es eine Vertiefung oder unzulässige Erhebung - in der Schweißnaht vorkommt, wird dies anhand des dann nicht mehr gerade durchgehenden Abbildes der Lichtlinie zu erkennen sein und durch das Lichtschnitt-Triangulationsverfahren dreidimensional erfassbar sein.

Dieses zweidimensionale Intensitätsbild kann für die gesamte Prüfkontur erstellt werden, nachdem der Prüfkopf einmal die ganze Prüfkontur abgefahren hat und die entsprechenden Abbilder erzeugt hat. In einem zweiten Durchlauf muss jedoch die dreidimensionale Überprüfung nur in dem nunmehr genau bekannten Prüfbereich durchgeführt werden.

Eine andere Möglichkeit besteht darin, das Intensitätsbild nur für einen solchen Bereich - also Längenabschnittsbereich der Prüfkontur - zu erstellen, für den die erstellten Abbilder im Prüfkopf noch zwischengespeichert werden können, um nach Erstellen des zweidimensionalen Intensitätsbildes für diesen Abschnitt unmittelbar aus den Abbildern die dreidimensionale Überprüfung durchführen zu können, ohne einen erneuten Lauf des Prüfkopfes entlang dieses Abschnittes der Prüfkontur durchführen zu müssen.

Das zweidimensionale Intensitätsbild oder auch Helligkeitsbild wird erzeugt, indem für jedes einzelne Abbild einer Lichtlinie auf dem optischen Sensor die Lichtintensität, also die Helligkeit, an jeder Position in Erstreckungsrichtung des Abbildes der Lichtlinie bestimmt wird.

In der Regel sind diese Abbilder der Lichtlinien jedoch breiter als nur ein Pixel, so dass nicht die Helligkeit, d.h. die Intensität, eines einzigen Pixels gewertet werden kann, sondern die Summe der Lichtintensitäten aller an dieser Position in Erstreckungsrichtung des Abbildes nebeneinander liegenden Pixel.

Neben der Lichtintensität über der Breite des Abbildes der Lichtlinie muss auch die genaue Querposition innerhalb des Abbildes festgelegt werden, wofür mehrere Möglichkeiten zur Verfügung stehen:
- Bevorzugt wird die Position des Schwerpunktes der über die Breite des Abbildes verteilten Lichtintensitäten der einzelnen Pixel gewählt,
- oder es wird die Position desjenigen Pixels in Querrichtung zur Erstreckung des Abbildes gewählt, welches die höchste Lichtintensität aufweist,
- oder es wird als Position dasjenige Pixel in Querrichtung zur Erstreckungsrichtung des Abbildes gewählt, welches rein geometrisch der Mitte der Breite des Abbildes der Lichtlinie am nächsten liegt.

Nachdem auf diese Art und Weise das zweidimensionale Intensitätsbild erstellt ist, müssen die Kanten des Prüfbereiches in diesem Intensitätsbild erm ittelt werden.

Zum Zwecke der direkten Kantenbestimmung stehen wiederum mehrere Methoden zur Verfügung:
- Es können die Lichtintensitäten, also die Helligkeitswerte, benachbarter Pixel aus dem zweidimensionalen Intensitätsbild der Abbilder von Lichtlinien als direkte Methode verglichen werden. Dort, wo der Intensitätsunterschied zweier benachbarter Pixel einen Mindestunterschied überschreitet, wird die Kante der Prüfkontur vermutet und dies als Kante festgelegt.
- Eine andere direkte Methode besteht darin, die erste mathematische Ableitung des Verlaufs der Lichtintensitäten von einem Pixel zum nächsten zu erstellen, wiederum in Querrichtung zur Verlaufsrichtung der Prüfkontur, also z. B. in Erstreckungsrichtung eines Abbildes der Lichtlinie.
   Dort, wo der Wert der ersten Ableitung über einem Ableitungsschwellenwert liegt, wird die Kante der Prüfkontur vermutet und dies als Kante festgelegt.
- Ebenso kann der mittlere Rauschwert an Intensitäten der einzelnen Pixel des zweidimensionalen Intensitätsbildes bestimmt werden und mittels eines Filters nur die Bereiche oberhalb eines Schwellenrauschwertes als Bereich für die Prüfkontur gewählt werden.
- Die Kantenerkennung kann jedoch auch mittels eines indirekten Verfahrens durchführt werden, was einen höheren Rechenaufwand erfordert, aber die Genauigkeit der Kantenerkennung verbessert:
   Das zweidimensionale Intensitätsbild ist ein Graustufenbild ähnlich einer Schwarz-Weiß-Fotografie. Am Beispiel einer Schweißnaht wird dabei der Bereich der Schweißnaht beispielsweise dunkler sein als der Umgebungsbereich.
   Dennoch wird der Bereich der Schweißnaht, also der Prüfbereich, nicht flächig durchgehend einen bestimmten Graustufenton aufweisen, sondern es wird innerhalb des Prüfbereiches ebenfalls eine Schwankung des Grauwertes vorliegen.
   Die Optimierungsmethode besteht deshalb darin, dass zunächst ein Intensitätsschwellenwert vorgegeben wird und alle Pixel des Intensitätsbildes, die oberhalb des Intensitätsschwellenwertes liegen, hell angezeigt werden, während alle anderen als dunkel angezeigt werden.
   Der Prüfbereich wird daher zum Großteil z. B. dunkel sein mit einer Reihe von entweder gleichmäßig verteilten, oder auch teilweise gehäuft auftretenden hellen Pixeln.

Nunmehr wird eine erste Raumrichtung, z. B. quer zur Verlaufsrichtung des Prüfbereiches, festgelegt und in dieser Raumrichtung jedes helle Pixel um einen festgelegten Faktor, z. B. den Faktor 10 oder 20, zu einem hellen Strich gedehnt, dessen Breite bei einer Pixelbreite unverändert bleibt.

Dabei wird es häufig vorkommen, dass zueinander in Richtung der Striche benachbarte helle Striche sich zu einem noch längeren einzigen hellen Strich vereinen.

Anschließend werden die hellen Striche in der gleichen Richtung wieder geschrumpft und zwar um denselben Faktor wie vorher die Pixel zu Strichen gedehnt wurden. Danach wird es jedoch eine geringere Anzahl an hellen Pixeln wegen der Vereinigung von hellen Strichen zu hellen Gesamtstrichen geben als im Ausgangszustand.

Der gleiche Vorgang kann nun in einer anderen quer dazu verlaufenden Raumrichtung, vorzugsweise lotrecht zur ersten Raumrichtung stehend, durchführt werden.

Auf diese Art und Weise wird die Anzahl der durch die vorstehenden Maßnahmen bearbeiteten Pixel, beispielsweise der hellen Pixel, reduziert, bis ihre Anzahl gegenüber der Kontrastfarbe z. B. dunkel, so minimal ist, dass eine eindeutige Kantenbestimmung des dunkel erscheinenden Prüfbereiches mit bekannten direkten Kantenerkennungsmaßnahmen z. B. wie vorher beschrieben, eindeutig möglich ist.

Es sollte daher als Ausgangszustand für die Optimierungsmaßnahme der Intensitätsschwellenwert bereits so gelegt werden, dass keine Gleichverteilung, sondern ein eindeutiges Übergewicht heller zu dunkler Pixel oder umgekehrt vorhanden ist, und die beschriebenen Optimierungsmaßnahmen dann auf die in der Minderheit befindlichen Pixel angewandt werden.

Bei Bedarf kann dieses Optimierungsverfahren für jede einzelne Raumrichtung auch mehrfach hintereinander durchgeführt werden, vorzugsweise jedoch immer erst nachdem in beide Raumrichtungen einmal optimiert wurde.

Es kann nun ferner vorkommen, dass für das Erstellen der Abbilder von Lichtlinien auf dem optischen Sensor zur Vermeidung von Über- und Unterbelichtungen Ober- und Untergrenzen der Lichtintensität der einzelnen Pixel auf dem Sensor vorgegeben werden müssen.

Um die Lichtintensität der einzelnen Pixel auf dem optischen Sensor innerhalb dieses Sollbereiches zu halten kann es notwendig sein, die Beleuchtungsstärke zu verändern, beispielsweise durch Veränderung der Belichtungszeit oder der Leistung der Leuchtquelle, insbesondere des den Prüfbereich bestrahlenden Lasers.

Das Erstellen des zweidimensionalen Intensitätsbildes kann dann wie vorbeschrieben dennoch durchgeführt werden, vor allem wenn die durchgeführte Veränderung der Beleuchtungsstärke beim Herstellen der Abbilder quantitativ bekannt ist und gespeichert wird und bei der Bestimmung der Lichtintensität der einzelnen Pixel des Abbildes rechnerisch mitberücksichtig wird.

Auf diese Art und Weise können trotz Vermeidung von Über- und Unterbelichtungen realistische zweidimensionale Intensitätsbilder hergestellt werden.

Sobald auf diese Art und Weise mit Hilfe des zweidimensionalen Intensitätsbildes die Kanten des Prüfbereiches genau bekannt sind, wird die dreidimensionale optische Überprüfung der Prüfkontur durchgeführt.

### c) Ausführungsbeispiele

Ausführungsformen gemäß der Erfindung sind im Folgenden beispielhaft näher beschrieben. Es zeigen:
- Fig. 1a, b:: eine Detektoreinheit nach dem Stand der Technik mit einer aufgewölbten Prüfkontur,
- Fig. 2a, b:: das entsprechende Abbild der Lichtlinie gemäß dem Stand der Technik,
- Fig. 3a:: eine Detektoreinheit mit einer im Wesentlichen flachen Prüfkontur,
- Fig. 3b, c:: das dadurch bewirkte linienförmige Abbild der Lichtlinie,
- Figuren 4:: den Verlauf eines Kantenerkennungsverfahrens.

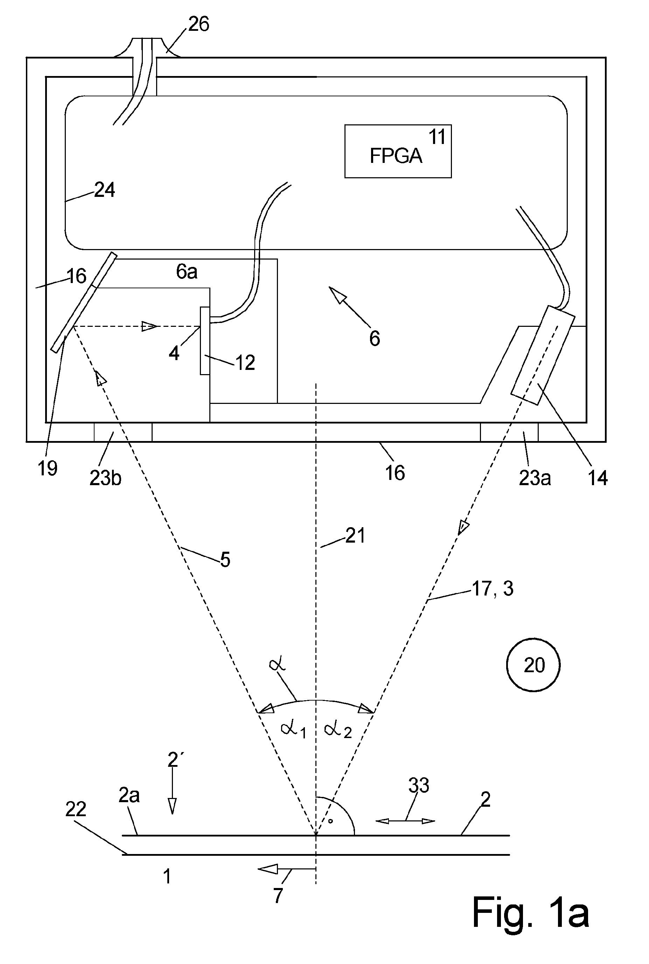

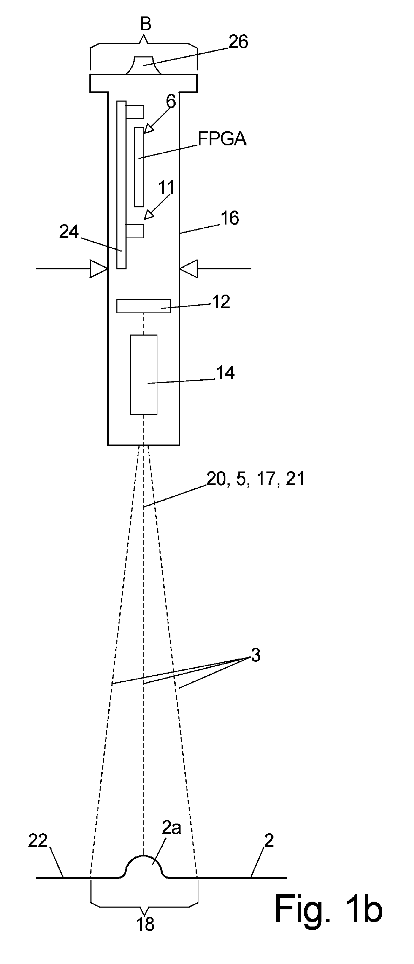

Figur 1 zeigt eine Detektoreinheit in der Seitenansicht, die auch erkennen lässt, wie das bekannte Lichtschnitt-Triangulationsverfahren prinzipiell funktioniert:
Dabei wird ein fächerförmiger Lichtstrahl 3 auf die Oberfläche 2 eines Objektes 1 gerichtet - quer zur Erhebung 2a verlaufend - und erzeugt dort eine Lichtlinie. Die von der Oberfläche 2 des Objektes 1 reflektierte Lichtlinie wird von einer Detektoreinrichtung 6 als Abbild 4 aufgenommen, die aus z. B. einem flächigem, optischen Sensor 12 sowie einer damit verbundenen elektronischen Verarbeitungseinheit 11 zum Verarbeiten der vom Sensor 12 aufgenommenen Bilddaten und berechnen der Ergebnisdaten.
Damit sich auf dem optischen Sensor 12 ein Abbild 4 abzeichnet, welches Rückschlüsse auf die tatsächliche Kontur 2' der Oberfläche 2 an dieser Stelle zulässt, dürfen die Abstrahlrichtung 17 des Lichtstrahls 3 und die Blickrichtung 5 der Detektoreinheit 6 nicht zusammenfallen, sondern müssen sich durch einen Triangulationswinkel α unterscheiden. Vorliegend sind diese beiden Richtungen so gewählt, dass sie symmetrisch beidseits der Lotrechten 21 auf die Oberfläche 2 liegen, also von dieser jeweils einen Zwischenwinkel α₁ = α₂ einnehmen.

Eine Unebenheit, beispielsweise eine Erhebung 2a, auf der Oberfläche 2 im Auftreffbereich des Lichtstrahles 3, wird als Abbild 4 auf der Oberfläche 2 und damit auch auf dem Sensor 12 keine gerade Linie, sondern eine Linie mit einer Aufwölbung 4a darin ergeben, wobei diese Aufwölbung 4a des Abbildes 4 sich abhängig von dem Triangulationswinkel α und der Aufteilung in die Zwischenwinkel α₁ und α₂ von der Form der Aufwölbung 2a geschnitten entlang der Lotrechten 21 unterscheiden kann. Wegen der bekannten Winkel α, α₁, α₂ sowie der Fokussierung auf die Oberfläche und/oder der Bekanntheit des Abstandes der Detektoreinheit 6 von der Oberfläche 2 kann aus den Abmessungen des Abbildes 4 auf die tatsächlichen Abmessungen der Aufwölbung 2a auf der Oberfläche 2 rechnerisch geschlossen werden.

Wie Figur 1a, b zeigen, sind nicht nur die erwähnten Komponenten der Detektoreinrichtung 6, sondern auch die Lichtquelle 14 zur Erzeugung des ausgesandten Lichtstrahles 3 gemeinsam innerhalb des Gehäuses 16 der Detektoreinheit untergebracht, wobei dieses Gehäuse plattenförmig flach ist mit einer Hauptebene parallel zu der durch Abstrahlrichtung 17 und Blickrichtung 5 aufgespannte Arbeitsebene und einer Breite B quer zu dieser Hauptebene 20, die nicht größer ist als die Beobachtungsbreite 18 des fächerförmigen Lichtstrahles 3, mit der dieser auf der Oberfläche 2 auftrifft.

Wie Figur 1 zeigt, ist die Detektoreinheit auch von den Abmessungen in der Hauptebene 20 sehr kompakt aufgebaut, was dadurch erreicht wird, dass die Lichtquelle 14, in der Regel eine Laserpatrone, nahe des für den Lichtstrahl vorgesehenen Durchlasses 23a im Gehäuse 16 angeordnet ist und der optische Sensor 12 nahe des anderen Durchlasses 23b, die sich beide in einer der Schmalseiten des Gehäuses befinden, wobei zwischen diesem Durchlass 23b und dem optischen Sensor 12 eine Umlenkung des eintreffenden Lichtstrahls, also der Blickrichtung 5, über einen Spiegel 19 in eine Richtung parallel zu der Außenkante, in der sich die Durchlässe 23a, b befinden, erfolgt.

Sowohl der Sensor 12 als auch der Spiegel 19 sind dabei an einem Detektor-Basiskörper 6a befestigt, der seinerseits am Gehäuse 16 der Einheit fixiert ist.

Dadurch verbleibt auf der von der Außenseite mit den Durchlässen 23a, b abgewandten Hälfte des Gehäuses ausreichend viel Platz, um dort eine in der Hauptrichtung 20 des Gehäuses liegende Platine 24 anzuordnen, die die gesamte elektronische Verarbeitungseinheit 11 enthält und mit dem Sensor 12 über elektrische Leitungen ebenso in Verbindung steht wie mit der Lichtquelle 14. Die von der Verarbeitungseinheit 11 ermittelten Ergebnisdaten werden über einen Stecker 26 ausgegeben.

Die nach dem Lichtschnittverfahren hergestellten Einzelaufnahmen werden in zeitlich schneller Abfolge wiederholt, um die sich in Bewegungsrichtung 7 relativ zur Detektoreinheit bewegende Oberfläche 2 des Objektes 1 ständig zu beobachten. Da dies z. B. an einer Produktionsmaschine für das Objekt 1 oder die Erhebung 2a auf der Basisfläche 2, beispielsweise eine Kleberraupe auf einem Karton als Basisfläche 22, durchgängig geschehen soll, ist es notwendig, dass die Berechnung der Ergebnisdaten zeitaktuell geschieht, also von der Verarbeitungseinheit die Ergebnisdaten genauso schnell, also im gleichen Rhythmus, geliefert werden müssen, wie die einzelnen Aufnahmen von dem Sensor 12 angefertigt werden.

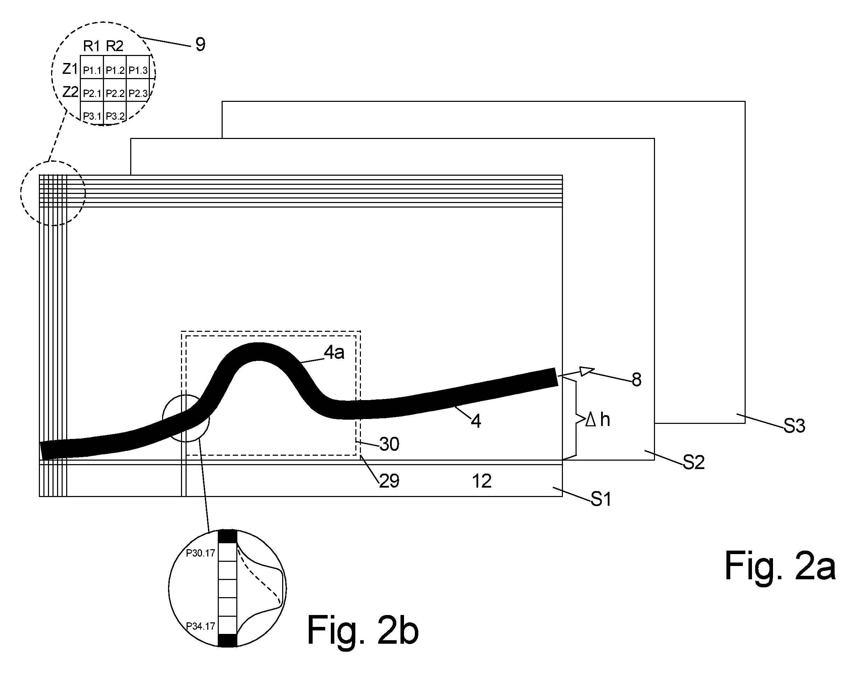

Mittels der Detektoreinheit sollte in der Regel nicht zufällige Konturgestaltungen untersucht werden, sondern es werden bestimmte Konturen erwartet, wie im Beispielsfall der Figuren 2a, b eine Aufwölbung 4a in einem ansonsten im wesentlichen linienförmig geraden Abbild 4 in Form einer Lichtlinie bzw. eines Lichtbandes.

Dabei müssen die Abmessungen dieser Aufwölbung 4a ermittelt werden und daraus die tatsächlichen Abmessungen der Erhebung 2a aus der Basisfläche 22 berechnet werden.

In Figur 2 ist ein solches Abbild 4 gleichzeitig auf der Oberfläche des optischen Sensors 12 dargestellt.

Das Abbild 4 besteht darin, dass dort, wo die reflektierte Lichtlinie auf der Fläche des Sensors 12 auftrifft, die entsprechenden rasterartig in Reihen R1, R2.. und Zeilen Z1, Z2.. angeordneten Pixel P1.1, P1.2.. P2.1. P2.2.. des Sensors 12 stärker beleuchtet sind, also einen höheren Helligkeitswert aufweisen, als diejenigen Pixel, auf denen das Abbild, also der vom Objekt 1 reflektierte Lichtstrahl 3, nicht auftrifft. In der zeichnerischen Schwarz-weiß Darstellung ist dies invers dargestellt, nämlich das Abbild 4 in Form der Lichtlinie dunkel dargestellt.

Die Pixel innerhalb des Abbildes 4 weisen dabei auch unterschiedliche Helligkeitswerte auf, in der Regel am Rand des bandförmigen Abbildes mit einem geringeren und in der Mitte mit einem höheren Helligkeitswert, was jedoch nicht immer der Fall ist und vom Reflektionsverhalten der Oberflächenkontur 2' abhängt.

Eine Reduzierungsmethode liegt in der Datenreduzierung durch rechnerisches Reduzieren des an sich über mehrere Pixel breiten Lichtbandes des Abbildes 4, z. B. wiederum nur im interessierenden Bereich 30, auf die Breite nur eines Pixels.

So besitzt das Abbild 4 in Form einer Lichtlinie beispielsweise in Reihe 17 eine Breite von fünf Pixeln, indem in dieser Reihe die Pixel P30.17 bis einschließlich P34.17 einen erhöhten Helligkeitswert aufweisen.

Da primär der Verlauf des bandförmigen Abbildes 4 und nicht deren Breite interessiert, ist es ausreichend, den Verlauf des Abbildes 4 auf eine in Erstreckungsrichtung 8 des Bandes hintereinander liegende Abfolge von einzelnen Pixeln, den so genannten Profilpunkte also auf eine Linie mit einer Breite von einem Pixel, zu reduzieren.

Dies kann auf mehrere Arten geschehen, z. B. indem an jeder Längsposition entlang der Erstreckungsrichtung 8 des Abbildes 4, also in diesem Fall in jeder Reihe, von den Pixeln mit erhöhtem Helligkeitswert dasjenige mit dem höchsten Helligkeitswert als relevantes Pixel gewählt wird, oder dasjenige Pixel in der Mitte der beleuchteten Pixel, in diesem Fall P32.17 aus P30.17 bis P34.17.

Da die Helligkeitsverteilung quer über das bandförmige Abbild 4' nicht immer gleichmäßig, z. B. nicht unbedingt gaußförmig, sein muss, kann eine Gewichtung hinsichtlich des Helligkeitswertes erfolgen und deshalb kann auch der Schwerpunkt der über der Breite b des Abbildes 4 aufgetragenen Helligkeitswerte bestimmt und als Profilpunkte verwendet werden.

Dadurch wird das bandförmige Abbild reduziert auf eine Abfolge einzelner Profilpunkte in Erstreckungsrichtung 8 des Abbildes 4 hintereinander.

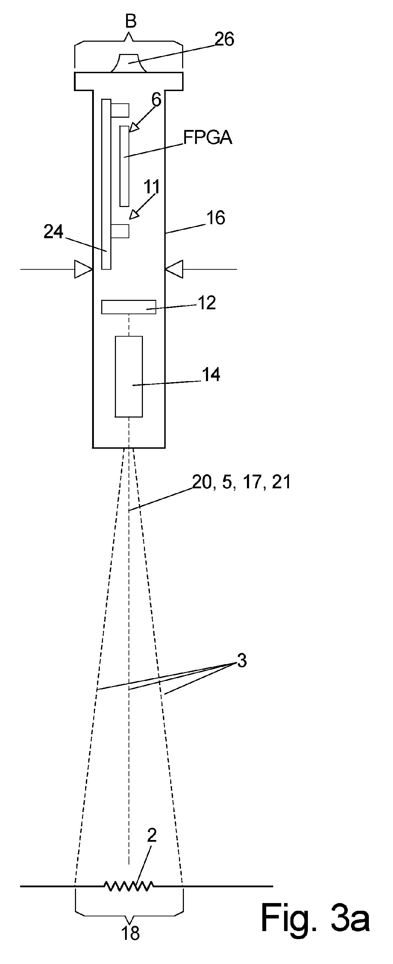

Figur 3a zeigt die Situation ähnlich der Figur 1b, also mit der gleichen Detektoreinheit 6, jedoch stellt die Prüfkontur 2 gegenüber der Umgebung keine Erhebung mehr dar, sondern liegt in deren Ebene, und unterscheidet sich lediglich von der Umgebung durch ihre anderes Reflektionsverhalten, was durch eine andere Materialbeschaffenheit an der Oberfläche bedingt sein kann oder durch eine mikroskopisch andere Struktur durch viele in unterschiedliche Richtungen gerichtete, mikroskopisch kleine Facetten oder Ähnliches, wie durch die kleine Welligkeit im Bereich der Prüfkontur 2 in Figur 3a angedeutet.

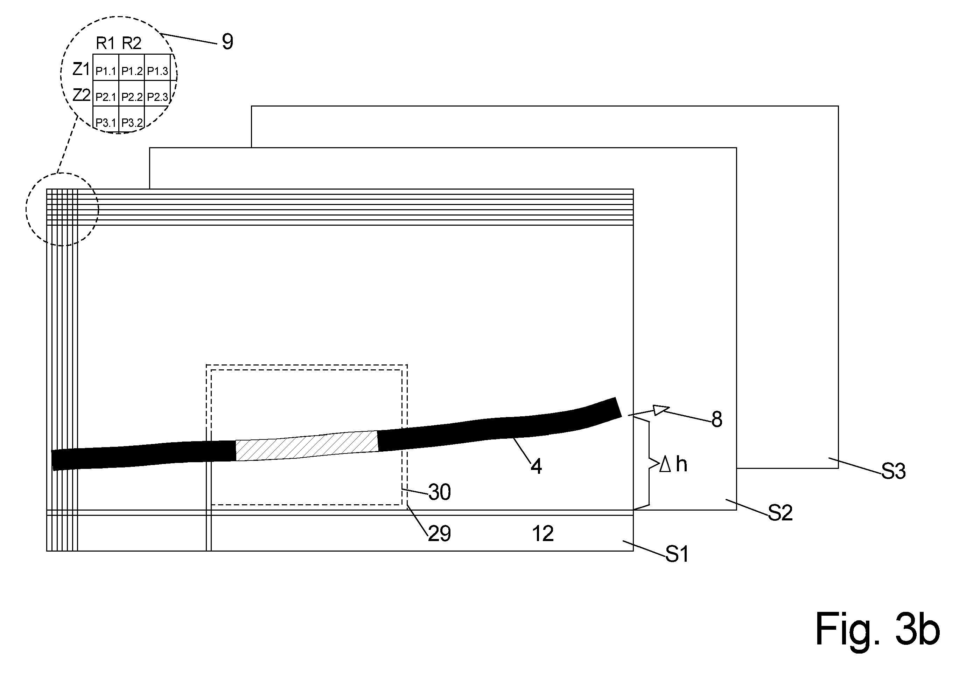

Dementsprechend ergibt dies - wie in Figur 3b dargestellt - ein Abbild 4 einer Lichtlinie, welche nicht mehr hutförmig ist, sondern im Wesentlichen eine gerade Linie, die jedoch in dem Bereich der Prüfkontur 2, also im interessierenden Bereich 30, heller ist als abseits davon, wobei die größere Helligkeit hier durch schraffierte Bereiche in dem Abbild 4 dargestellt ist.

Um die Lage der Prüfkontur 2, z. B. der Schweißnaht, zu bestimmen, ist jedoch in aller Regel ein einziges linienförmiges Abbild nicht ausreichend, sondern es sind mehrere linienförmige Abbilder 4 hintereinander und meist in Summe betrachtet notwendig, um den Verlauf der Prüfkontur 2 anhand der Lichtintensitäten der Pixel grob bestimmen zu können.

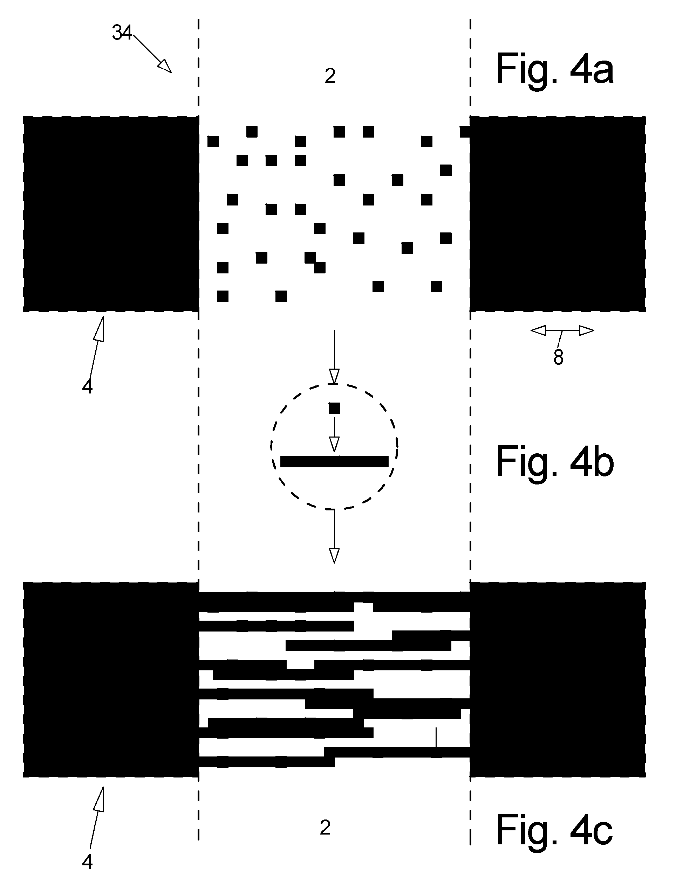

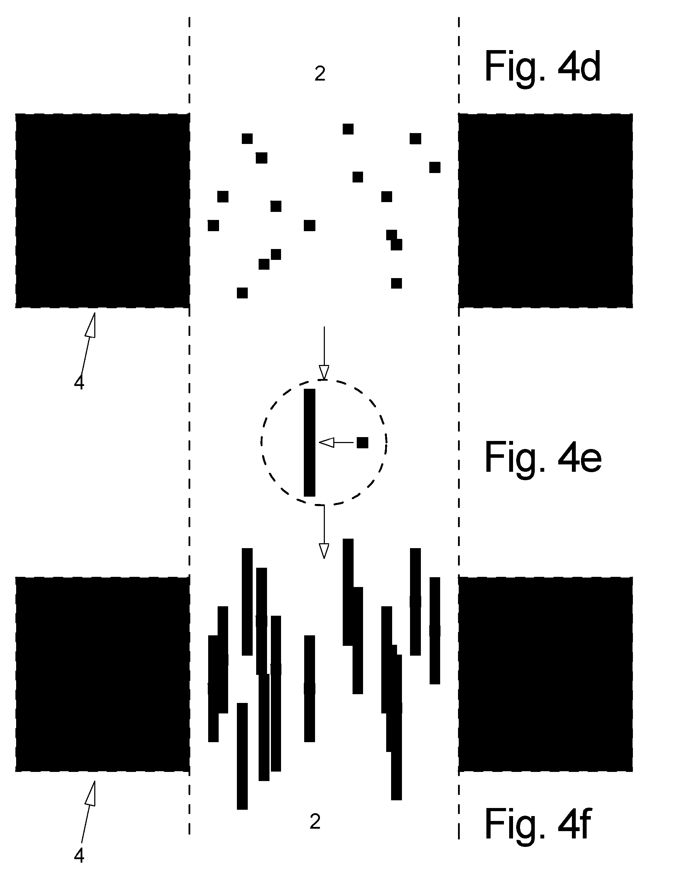

Figur 4a zeigt eine Abfolge von einem oder mehreren querverlaufenden nahtlos aneinander anschließenden linienförmigen Abbildern 4, die jeweils ein oder mehrere Pixel breit sind, wie sie bei geeignetem optischen Sensor angesammelt oder andernfalls in einem nachgeordneten Speicher aufaddiert werden können.

Dabei ist der mittlere Bereich in etwa derjenige der Prüfkontur 2, da er viele helle Bereiche, aber noch viele dunkle Pixel enthält, während abseits der Prüfkontur 2 praktisch ausnahmslos dunkle Pixel vorhanden sind.

Da aus einem solchen zweidimensionalen Intensitätsbild, also Helligkeitsbild, die Kanten, also Grenzen, zwischen dem mittleren hellen Bereich und den schwarzen äußeren Bereichen automatisch noch nicht gut ermittelt werden können, wegen noch zu vieler dunkler Pixel im hellen Bereich, wird vorzugsweise ein Optimierungsverfahren durchgeführt:
Die Abbilder der Lichtlinien verlaufen dabei in Figur 4a von links nach rechts, während die Prüfkontur 2 von oben nach unten verläuft, deren äußere seitliche Ränder erst genau bestimmt werden sollte für die nachfolgende 3-D-Überprüfung.

Hierzu soll im helleren mittleren Bereich, dem Bereich der Prüfkontur 2, die Anzahl der dunklen Pixel reduziert werden. Für die Unterscheidung zwischen Hell und Dunkel wird ein Schwellenwert definiert.

In einem ersten Schritt erfolgt dies dadurch, dass jeder dunkle Pixel in Verlaufsrichtung seines Abbildes zu einem - in der Figur schwarzen - Strich 35 mit einer Länge von z. B. 11 Pixeln auseinander gezogen wird, dessen Mitte das ursprüngliche dunkle Pixel ist, wie in Figur 4b an einem Beispiel dargestellt.

Dadurch ergeben sich - siehe Figur 4c - horizontal liegende schwarze Streifen oder Striche 35, deren Anzahl jedoch geringer ist als die ursprüngliche Anzahl dunkler Pixel in diesem Bereich, da sich mehrere der erzeugten dunklen Balken überlappen und ineinander übergehen.

Im nächsten Schritt wird - gemäß Figur 4d - jeder schwarze Balken 35 im mittleren Bereich reduziert auf ein einziges dunkles Pixel in seiner Mitte. Die so erzielte Anzahl schwarzer Pixel ist ersichtlich deutlich geringer als die Ausgangssituation in Figur 4a.

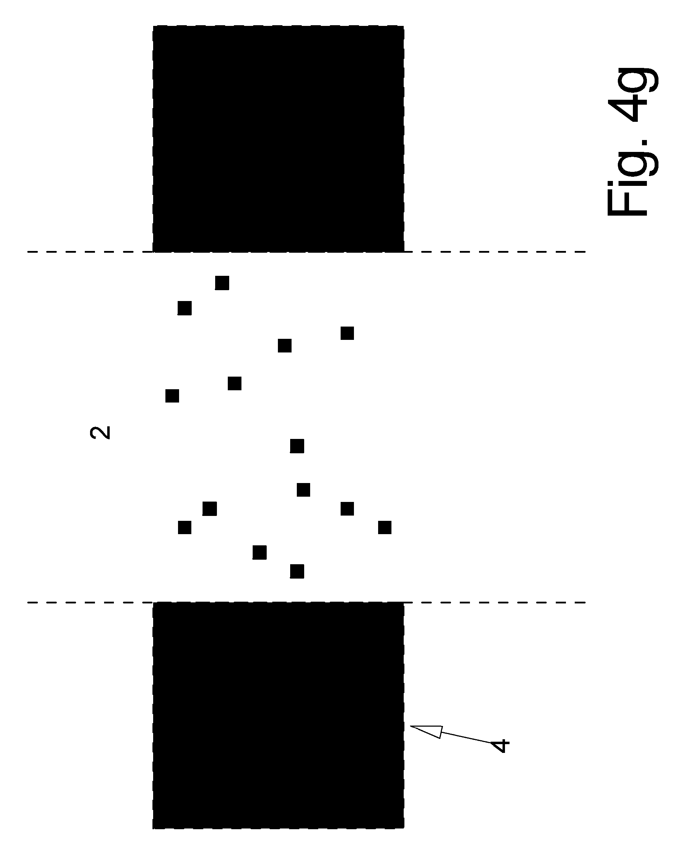

Mit den schwarzen Pixeln gemäß Figur 4d wird nun dasselbe Verfahren nochmals angewandt, jedoch mit schwarzen Strichen quer zur Verlaufsrichtung der Lichtlinien, also in Verlaufsrichtung der Prüfkontur 2, wodurch die Anzahl der dunklen Pixel im hellen Bereich erneut reduziert wird auf die in Figur 4g dargestellte Endsituation.

Nunmehr sind in dem hellen Bereich so wenige dunkle Pixel enthalten, dass eine fast durchgängig helle Fläche im mittleren Bereich von der fast durchgängig schwarzen Flächen daneben automatisch mittels bekannter Verfahren zur Kantenbestimmung abgegrenzt werden kann und dadurch die Grenzen der Prüfkontur 2 bekannt sind, die im Folgenden - ggf. zzgl. eines seitlichen Sicherheitszuschlages - dreidimensional mittels des Lichtschnitt-Triangulationsverfahrens überprüft werden muss.

### BEZUGSZEICHENLISTE

- 1: Objekt
- 2: Lötnaht, Prüfkontur
- 2': Prüfstelle
- 2a: Erhebung
- 3: Lichtstrahl, Beleuchtungsrichtung
- 4, 4a-b: Abbild
- 5,5': Blickrichtung
- 6: Prüfkopf
- 6a,b: Detektoreinheit
- 7: Bewegungsrichtung
- 8: Erstreckungsrichtung
- 9: Bilddatenspeicher
- 10: Bilddaten
- 11: elektronische Verarbeitungseinheit
- 12, 12': optischer Sensor
- 13a, b: paralleler Ausgang
- 14: Lichtquelle
- 15: Interner Speicher
- 16: Gehäuse
- 17: Abstrahlrichtung
- 18: Beobachtungsbreite
- 19: Spiegel
- 20: Betrachtungsebene
- 21: Lotrechte
- 22: Nenn-Abstand
- 23: Durchlass
- 24: Platine
- 26: Stecker
- 29: Sicherheitsbereich
- 30,: interessierender Bereich
- 34: zweidimensionales Intensitätsbild
- 35: Strich, Balken
- 36:
- α₁, α₂: Triangulations-Winkel
- β₁, β₂: Betrachtungswinkel
- P1.1: Pixel
- D1.1: Datensatz
- Z1: Zeile
- R1: Reihe
- S1: Scan
- b, B: Breite

## Patentansprüche

1. Verfahren zum berührungslosen, optischen, 3-dimensionalen Prüfen von 3-dimensionalen, längsverlaufenden Prüfkonturen (2) auf Unregelmäßigkeiten, insbesondere Vertiefungen (2a), mittels des Lichtschnitt- Triangulationsverfahrens mit einem optischen Prüfkopf (6), wobei
a) auf die Prüfkontur (2) eine quer zu deren Verlaufsrichtung (33) liegende Lichtlinie aufgestrahlt und das von der Prüfkontur (2) reflektierte Licht von wenigstens einem optischen Sensor (12) als linienförmiges Abbild (4) aufgenommen wird,
b) der Prüfkopf (6) in Verlaufsrichtung relativ zur Prüfkontur bewegt wird, und dabei einzelne Aufnahmen der zu prüfenden Längspositionen (2') anfertigt, die vorzugsweise die Prüfkontur in Verlaufsrichtung (33) vollständig abdecken,
**dadurch gekennzeichnet, dass**
c) in einem ersten Schritt aus den Abbildern (4) der Lichtlinien, insbesondere allen Abbildern der Lichtlinien, die Lichtintensität an jeder Erstreckungsposition des Abbildes in Erstreckungsrichtung (8) der Lichtlinie bestimmt wird,
d) aus mindestens einem, vorzugsweise mehreren Intensitätsverläufen in Erstreckungsrichtung (8) von Lichtlinien ein zweidimensionales Intensitätsbild (34) zumindest eines Längsabschnittes der Prüfkontur (2) erstellt wird,
e) die seitlichen Ränder der Prüfkontur aus diesem zweidimensionalen Intensitätsbild (34) mittels Kantenerkennung bestimmt werden und
f) die dreidimensionale Überprüfung der Prüfkontur (2) nur in dem tatsächlichen Breitenbereich der Prüfkontur (2) mittels des Lichtschnitt-Triangulationsverfahrens durchgeführt wird.
Die nachfolgenden Unteransprüche sind unverändeit.

2. Verfahren nach Anspruch 1,
**dadurch gekennzeichnet, dass**
bei einer Breite (b) des linienförmigen Abbildes (4) der Lichtlinie von mehr als einem Pixel des optischen Sensors (12), das linienförmige Abbild (4) auf eine Abfolge von Profilpunkten (32) in Erstreckungsrichtung (8) reduziert wird, wobei als Lichtintensität dieses Profilpunktes (32) z. B. die Summe oder der Durchschnitt der Lichtintensitäten aller an dieser Längsposition der Lichtlinie nebeneinander liegenden Pixel des linienförmigen Abbildes (4) gewählt wird.

3. Verfahren nach einem der vorhergehenden Ansprüche,
**dadurch gekennzeichnet, dass**
als Querposition des Profilpunktes (32) innerhalb des linienförmigen Abbildes (4)
- die Position des Schwerpunktes der über die Breite (b) des Abbildes (4) verteilten Lichtintensitäten oder
- die Position des Pixels mit der höchsten Lichtschnittintensität über die Breite (b) an dieser Längsposition oder
- dasjenige Pixel in der Mitte der Breite (b) des Abbildes der Lichtlinie gewählt wird.

4. Verfahren nach einem der vorhergehenden Ansprüche,
**dadurch gekennzeichnet, dass**
das zweidimensionale Intensitätsbild (34) erstellt wird nach dem Erstellen der Abbilder (4) entlang der gesamten Länge der Prüfkontur (2).

5. Verfahren nach einem der vorhergehenden Ansprüche,
**dadurch gekennzeichnet, dass**
das zweidimensionale Intensitätsbild (34) erstellt wird nach Herstellung einer vorgegebenen Anzahl von Abbildern (4) der Lichtlinie entlang der Prüfkontur (2).

6. Verfahren nach einem der vorhergehenden Ansprüche,
**dadurch gekennzeichnet, dass**
für die Kantenerkennung ein vorgegebener Mindestunterschied an Lichtintensität zwischen zwei in Verlaufsrichtung (8) des Abbildes (4) der Lichtlinie benachbarten Pixeln des Intensitätsbildes festgelegt wird und die Grenze zwischen diesen beiden Pixeln als Kante der Prüfkontur (2) festgelegt wird.

7. Verfahren nach einem der vorhergehenden Ansprüche,
**dadurch gekennzeichnet, dass**
für die Kantenerkennung die erste mathematische Ableitung der Lichtintensität jedes Pixels in Verlaufsrichtung (8) des Abbildes (4) der Lichtlinie relativ zu seinem Nachbarn durchgeführt wird und bei einem Ableitungswert oberhalb eines Ableitungsschwellenwertes diese Erstreckungsposition der Lichtlinie als Kante der Prüfkontur (2) gewählt wird.

8. Verfahren nach einem der vorhergehenden Ansprüche,
**dadurch gekennzeichnet, dass**
für die Kantenerkennung der mittlere Rauschwert der Intensitäten des zweidimensionalen Intensitätsbildes (34) bestimmt wird und mittels eines Filters nur die Bereiche oberhalb eines Schwellen-Rauschwertes als Bereich der Prüfkontur gewählt werden.

9. Verfahren nach einem der vorhergehenden Ansprüche,
**dadurch gekennzeichnet, dass**
die Kantenerkennung optimiert wird, indem das zweidimensionale Intensitätsbild (34) so weiter verarbeitet wird, dass
- alle Pixel des optischen Sensors (12) mit einem Intensitätswert oberhalb eines Intensitäts-Schwellenwertes als hell angezeigt werden,
- die übrigen Pixel als dunkel angezeigt werden,
- in einer ersten Raumrichtung, z. B. der Querrichtung zur Verlaufsrichtung (33) der Prüfkontur (2), jedes z. B. dunkle Pixel durch einen dunklen Strich (35) definierter Länge und insbesondere nur mit einer Pixelbreite ersetzt wird,
- die dadurch entstehenden längeren hellen Striche (35) zu einem Pixel in ihrer Mitte oder zu verkürzten Strichen (35') reduziert werden im umgekehrten Verhältnis der vorherigen Verlängerung des Pixels zu einem Strich (35).

10. Verfahren nach Anspruch 9,
**dadurch gekennzeichnet, dass**
die Optimierung der Kantenerkennung für eine zweite Raumrichtung, die quer zur ersten gewählten Raumrichtung steht, und insbesondere lotrecht hierzu steht, erneut durchgeführt wird.

11. Verfahren nach einem der vorhergehenden Ansprüche 9 oder 10, **dadurch gekennzeichnet, dass**
das beschriebene Optimierungsverfahren mehrfach hintereinander durchgeführt wird, insbesondere in jeder der beiden Raumrichtungen.

12. Verfahren nach einem der vorhergehenden Ansprüche,
**dadurch gekennzeichnet, dass**
aus dem erhaltenen flächigen zweidimensionalen Intensitätsbild (34) die sich ergebende fast durchgängig helle Fläche als Bereich der Prüfkontur (2) und deren Kanten als Kanten des zu überprüfenden Bereiches gewählt wird.

13. Verfahren nach einem der vorhergehenden Ansprüche,
**dadurch gekennzeichnet, dass**
- vor Erstellen des zweidimensionalen Intensitätsbildes (34) zur Vermeidung von Über- und Unterbelichtungen Ober- und Untergrenzen der Lichtintensität für das einzelne Pixel auf dem optischen Sensor (12) vorgegeben werden und
- bei Intensitäten außerhalb dieses Soll-Bereiches die Beleuchtungsstärke durch Verändern der Belichtungszeit oder der Leistung der Leuchtquelle oder eine Kombination von beiden verändert wird, bis die Intensität der einzelnen Pixel innerhalb des Soll-Bereiches liegt.

14. Verfahren nach Anspruch 13,
**dadurch gekennzeichnet, dass**
bei der anschließenden Erstellung des zweidimensionalen Intensitätsbildes (34) die Veränderung der Beleuchtungsstärke gegenüber der normalen Beleuchtungsstärke beim Ermitteln der Lichtintensität eines Pixels rechnerisch mitberücksichtigt wird.

## Claims

1. A method for touch free optical three dimensional testing of three dimensional longitudinally extending test contours (2) with respect to unevenness, in particular indentations (2a) using a light intersection triangulation method and an optical testing head (6), wherein
a) A line of light is radiated onto the test contour transversal to an extension (33) of the test contour and the light reflected by the test contour (2) is received by at least one optical sensor (12) as a line image (4),
b) wherein the testing head (6) is moved along the extension relative to the test contour and wherein the testing head generates individual images of longitudinal positions (2') to be tested wherein the images advantageously cover the test contour in its extension (33) in its entirety,
**characterized in that**
c) a light intensity at each extension position of the image in the extension direction (8) of the light line is determined in a first step from images (4) of the light lines, in particular all images of the light lines,
d) A two dimensional intensity image (34) of at least one longitudinal section of the test contour (2) is generated from at least one, advantageously plural intensity diagrams in extension direction (8) of light lines,
e) Lateral edges of the test contour are determined from the two dimensional intensity image (34) through edge recognition, and
f) the three dimensional testing of the test contour (2) is only performed in an actual width range of the test contour (2) using the light intersection triangulation method.
The subsequent dependent claims are not amended.

2. The method according to claim 1,
**characterized in that**
a line shaped image (4) is reduced to a sequence of profile dots (32) in the extension direction (8) when a width (b) of the line shaped image (4) of the light line is more than a pixel of the optical sensor (12), wherein e.g. a sum or average of light intensities of all pixels of the line shaped image (4) that are arranged adjacent to each other at this longitudinal position of the light line is selected as the light intensity of this profile dot (32).

3. The method according to one of the proceedings claims,
**characterized in that**
for a position of the profile dot (32) within the line shaped image (4)
- a position of a center of gravity of light intensities distributed over the width (b) of the image (4) is selected or
- a position of a pixel with the highest light intersection intensity over the width (b) at this longitudinal position is selected or
- a pixel in a center of the width (b) of the image of the light line is selected.

4. The method according to one of the preceding claims, **characterized in that** the two dimensional intensity image (34) is generated after generating the images (4) along the entire length of the test contour (2).

5. The method according to one of the preceding claims,
**characterized in that**
the two dimensional intensity image (34) is generated after generating a predetermined number of images (4) of the light line along the test contour (2).

6. The method according to one of the preceding claims,
**characterized in that**
a predetermined minimum difference of light intensity between two pixels of the intensity image that are adjacent in the direction of extension (8) of the image (4) of the light line is defined for edge recognition and a boundary between the two pixels is defined as an edge of the test contour (2).

7. The method according to one of the preceding claims,
**characterized in that**
for edge recognition a first mathematical derivative of the light intensity of each pixel in extension direction (8) of the image (4) of the light line is performed relative to its neighbor and an extension position of the light line is selected as an edge of the test contour (2) when the derivative value is above a derivative threshold value.

8. The method according to one of the preceding claims,
**characterized in that**
a medium noise value of the intensities of the two dimensional intensity image (34) is determined and only portions above a threshold noise valve are selected as portions of the test contour for the edge recognition.

9. The method according to one of the preceding claims,
**characterized in that**
the edge recognition is optimized **in that** the two dimensional intensity image (34) is processed further so that
- all pixels of the optical sensor (12) with an intensity value above an intensity threshold value are indicated as bright,
- the remaining pixels are indicated as dark,
- in a first direction in space, e.g. a transversal direction of the extension (33) of the test contour (2) each e.g. dark pixel is replaced with a dark line (35) of a defined length and in particular only with a width of one pixel,
- longer bright lines (35) thus created are reduced to a pixel in its center or to shorten lines (35) inversely proportional to a preceding extension of the pixel to form the line 35.

10. The method according to claim 9,
**characterized in that**
optimizing the edge recognition is performed anew for a second direction in space which is transversal to the first direction in space, in particular orthogonal thereto.

11. The method according to one of the preceding claims 9 or 10, **characterized in that**
the described optimization method is performed multiple times in sequence, in particular in each of the two directions in space.

12. The method according to one of the preceding claims,
**characterized in that**
from an obtained flat two dimensional intensity image (34) a resultant almost continuously bright surface is selected as a portion of the test contour (2) and its edges are selected as edges of the portion to be tested.

13. The method according to one of the preceding claims,
**characterized in that**
- before generating the two dimensional intensity image (34) for avoiding over- and under exposure an upper threshold value and a lower threshold value of the light intensity for the individual pixel are predetermined on the optical sensor (12), and
- for intensities outside of the nominal range the illumination intensity is varied by adjusting an exposure time or a power of the light source or a combination of both until the intensity of the individual pixels is within the nominal range.

14. The method according to claim 13,
**characterized in that**
For a subsequent generation of the two dimensional intensity image (34) a change of the illumination intensity relative to the normal illumination intensity is considered mathematically when determining the light intensity of a pixel.

## Revendications

1. Procédé pour le contrôle optique, tridimensionnel et sans contact pour la détection d'irrégularités en particulier de cavités (2a) sur des contours test (2) tridimensionnels, longitudinaux à l'aide par exemple du procédé de triangulation par coupe optique avec une tête de test optique (6),
a) une ligne de lumière transversale à la direction de propagation (33) étant émise sur le contour test (2) et la lumière réfléchie par le contour test (2) étant captée par au moins un capteur optique (12) sous forme d'image linéaire (4),
b) la tête de test (6) étant déplacée dans la direction de propagation par rapport au contour test, réalisant des prises individuelles des positions longitudinales (2') à tester, qui couvrent de préférence complétement le contour test, **caractérisé en ce que**
c) dans une première étape, l'intensité lumineuse est déterminée à chaque position d'extension de l'image dans la direction d'extension (8) de la ligne lumineuse à partir des images (4) des lignes lumineuses en particulier de toutes les images des lignes lumineuses ,
d) à partir d'au moins une de préférence plusieurs courbes d'intensité dans la direction d'extension (8) de lignes lumineuses, il est réalisé une image d'intensité bidimensionnelle (34) d'au moins un segment longitudinal du contour test (2),
e) les bords latéraux du contour test sont déterminés à partir de cette image d'intensité bidimensionnelle (34) au moyen de détection de bords, et
f) la vérification tridimensionnelle du contour test (2) n'est effectuée que dans la zone de largeur effective du contour test (2) au moyen du procédé de triangulation par coupe optique.

2. Procédé selon la revendication 1,
**caractérisé en ce**
**que** pour une largeur (b) de l'image en forme de ligne (4) de la ligne lumineuse de plus d'un pixel du capteur optique (12), l'image (4) en forme de ligne est réduite à une suite de points de profil (32) dans le sens d'extension (8), par exemple la somme ou la moyenne des intensités lumineuses de tous les pixels qui se trouvent les uns à côté des autres sur cette position longitudinale de la ligne lumineuse étant sélectionnée en tant qu'intensité lumineuse de ce point de profil (32).

3. Procédé selon l'une des revendications précédentes,
**caractérisé en ce**
**qu'**en tant que position transversale du point de profil (32) à l'intérieur de la figure en forme de ligne (4),
- la position du point principal des intensités lumineuses réparties sur la largeur (b) de la figure (4) ou
- la position du pixel avec l'intensité de coupe optique la plus élevée sur la largeur (b) à cette position longitudinale ou
- ce pixel au milieu de la largeur (b) de l'image de la ligne lumineuse est sélectionnée.

4. Procédé selon l'une des revendications précédentes,
**caractérisé en ce**
**que** la seconde image d'intensité bidimensionnelle (34) est définie après la réalisation des images (4) le long de l'ensemble de la longueur du contour test (2).

5. Procédé selon l'une des revendications précédentes,
**caractérisé en ce**
**que** la seconde image d'intensité bidimensionnelle (34) est obtenue après la réalisation d'un nombre prédéterminé d'images (4) de la ligne lumineuse le long du contour test (2).

6. Procédé selon l'une des revendications précédentes,
**caractérisé en ce**
**que** pour la détection de bords, il est déterminé une différence minimale prescrite d'intensité lumineuse entre deux pixels voisins de l'image d'intensité dans la direction de propagation (8) de l'image (4) de la ligne lumineuse et la limite entre ces deux pixels est déterminée en tant que bord du contour test (2).

7. Procédé selon l'une des revendications précédentes,
**caractérisé en ce**
**que** pour la détection de bord, la première dérivée mathématique de l'intensité lumineuse de chaque pixel est effectuée dans la direction de propagation (8) de l'image (4) de la ligne lumineuse par rapport au pixel voisin et cette position d'extension de la ligne lumineuse est sélectionnée comme bord du contour test (2) pour une valeur de dérivée au-dessus d'une valeur seuil de dérivée.

8. Procédé selon l'une des revendications précédentes,
**caractérisé en ce**
**que** pour la détection des bords, la valeur moyenne de bruit des intensités de l'image d'intensité bidimensionnelle (34) est définie et uniquement les zones au-dessus d'une valeur seuil de bruit sont sélectionnées en tant que zone du contour test au moyen d'un filtre.

9. Procédé selon l'une des revendications précédentes,
**caractérisé en ce**
**que** la détection des bords est optimisée dans le fait que l'image bidimensionnelle d'intensité (34) est traitée de sorte que
- tous les pixels du capteur optique (12) au-dessus d'une valeur seuil d'intensité sont affichés en clair,
- les autres pixels sont affichés en sombre,
- dans une première direction spatiale, par exemple la direction transversale par rapport à la direction de propagation (33) du contour test (2), chaque pixel sombre par exemple est remplacé par un trait sombre (35) de longueur définie et en particulier n'est remplacé que par une largeur de pixel,
- les traits clairs plus longs (35) qui en résultent sont réduits à un pixel en leur milieu ou à des traits raccourcis (35') dans un rapport inversé du prolongement précédent du pixel en un trait (35).

10. Procédé selon l'une des revendications précédentes,
**caractérisé en ce**
**que** l'optimisation de la détection des bords est effectuée à nouveau pour une seconde direction spatiale qui est transversale à la première direction sélectionnée.

11. Procédé selon l'une des revendications précédentes 9 ou 10,
**caractérisé en ce**
**que** le procédé d'optimisation décrit est effectué plusieurs fois successivement, en particulier dans chacune des deux directions spatiales.

12. Procédé selon l'une des revendications précédentes,
**caractérisé en ce**
**que** la surface claire en résultant presqu'en continu est sélectionnée comme zone du contour test (2) à partir de l'image d'intensité bidimensionnelle (34) obtenue de la surface et dont les bords sont sélectionnés comme bords de la zone à vérifier.

13. Procédé selon l'une des revendications précédentes,
**caractérisé en ce**
- **qu'**avant la réalisation de l'image d'intensité bidimensionnelle (34) pour éviter des sur-expositions ou sous-expositions, il est prescrit des limites supérieures ou inférieures d'intensité lumineuse pour le pixel unique sur le capteur optique (12) et
- pour des intensités à l'extérieur de cette plage de consigne, la force d'éclairage est modifiée par changement du temps d'exposition ou de la puissance de la source lumineuse ou une combinaison des deux, jusqu'à ce que l'intensité de chacun des pixels se trouve dans la plage de consigne.

14. Procédé selon la revendication 13,
**caractérisé en ce que**
pour la réalisation consécutive de l'image d'intensité bidimensionnelle (34), la modification de l'intensité d'éclairage par rapport à l'intensité normale d'éclairage doit être prise en compte dans le calcul de l'intensité lumineuse d'un pixel.
